# EUROPEAN PATENT APPLICATION

(11) **EP 2 196 658 A1**
(43) Date of publication of application: **16.06.2010**
(21) Application number: 08800507.9
(22) Date of filing: 18.08.2008
(51) Int. Cl.: F02F 5/00, F16J 9/16, F04B 53/02

(54) **A SEALING OIL RING**

(30) Priority: 06.10.2007 CN 200710181090; 13.10.2007 CN 200710182249; 23.12.2007 CN 200710305525; 28.12.2007 CN 200710308027; 28.12.2007 CN 200710300863
(71) Applicant: Yu, Xiuming, Handan City, Hebei 057550 (CN)
(72) Inventor: Yu, Xiuming, Handan City, Hebei 057550 (CN)
(74) Representative: Grootscholten, Johannes A.M.
(86) International application number: PCT/CN2008/001485
(87) International publication number: WO 2009/043227

(57) **Abstract**

The present invention concerns an oil sealing ring comprising a base ring (2) having a split; and an annular flange (1) radially-protruding outwards and disposed on an outer circumferential surface of said base ring (2); wherein an axially-traversed trough (38) is disposed on an inner circumferential surface of the base ring to the left of said split and a radially-traversed upper groove (4) is disposed on an upper surface to the left of the split of said base ring (2), so that an outer radially-lapping segment (11) and an outer axially-radially-lapping segment (12) are formed to the left of the split of said base ring (2); an axially-traversed outer-groove (10) disposed on said outer circumferential surface to the right of the split of said base ring (2); a groove (6) disposed on said outer circumferential surface to the right of said axially-traversed outer groove (10) of the base ring; said outer axially-radially-lapping segment (12) is inserted into said groove (6) disposed on said outer circumferential surface to the right of said axially-traversed outer groove (10) of the base ring; and said outer radially-lapping segment (11) is inserted into said axially-traversed outer groove (10).

## Description

### Technical Field

The invention relates to an oil ring, and particularly to an oil ring used in an oil ring outer-groove of a piston in an internal combustion engine or an air compressor.

### Description of the Related Art

Conventionally, an oil ring used in a piston-type diesel engine piston ring is divided into three types: 1) oil ring comprising a base ring having a split, an annular flange (oil scraping edge) radially-protruding outwards is disposed at the top portion of outer circumferential surface of the base ring, and an semi-circular groove for receiving a coil loaded spring is axially disposed at the center of the inner circumferential surface of the base ring. 2) Oil ring comprising a base ring having a split, an annular upper flange (upper oil scraping edge) radially-protruding outwards is disposed at the top portion of the outer circumferential surface of the base ring. An annular lower flange (lower oil scraping edge) radially-protruding outwards is disposed at the bottom portion of the outer circumferential surface of the base ring. An oil-discharging channel is radially-disposed on the base ring. A semi-circular recess for receiving a coil expanding spring is axially disposed at the center of inner circumferential surface of the base ring. 3) Oil ring comprising a base ring having a split, and an annular flange radially-protruding outwards and disposed on an outer circumferential surface of said base ring, a radially-traversed upper-groove being disposed on the upper surfaces of the both ends of the split and an axially-traversed groove being disposed on the inner circumferential surface of the both ends of the split, in which axially-traversed groove is provided an arc-shaped blocking body and in which radially-traversed upper-groove is provided an arc-shaped upper scraping segment, and a spring expanding ring is disposed on the inner circumferential surface of said base ring and the arc-shaped blocking body.

However, a problem with above-mentioned oil rings 1) and 2) is that oil leakage often occurs at the split of the base ring.

In the oil ring 3), its ring is consisted of a base ring and a blocking body (comprising the arc-shaped blocking body and the arc-shaped upper scraping segment), there are the following problems in its production and usage:
1. The radially outwards resilience of the arc-shaped blocking body is dependently supplied by the coil expanding spring, the oil ring can not function properly without the coil expanding spring, and the sealing performance is lost.
2. There are still two leakage places at the ring split, because an assemble clearance must be reserved between the bottom surface of the upper-groove and the lower surface of the upper scraping ring , and the oil leaking upwards through the base ring split will, through the assemble clearance, run in the left and right directions respectively, and finally leaks through the clearance between the left and right ends of the upper scraping ring and the two sides associated therewith.
3. Since at present most of motors are high speed motors, the structure of which is compact, and the space of the ring groove of the piston is limited, the axial height of the upper scraping ring must be limited be very small, the radial thickness of the blocking body is also very small, there is only a very narrow joining face, and the arc length of the blocking body is relatively long, extends beyond the split end of the base by a certain distance, so the blocking body, as a single piece, has low intensity and is easy to break. Once broken, it means a great quality accident for the whole internal combustion engine of the vehicle. Meanwhile, due to the relatively big arc-length, the contact area with the cylinder wall is relatively big, so that the friction increases.
4. The base ring has in free condition a large free split, and the blocking body can not be fixedly connected with the base ring, and thus it is often lost in the packing and transporting, which causes difficult for the user's mounting.
5. It is difficult for the blocking body to be mounted into cylinder. The blocking body is a separate piece and the free split of the base ring is big, the blocking body can not be attached to the base ring, thus the blocking body often falls off when being mounted into the ring groove of the piston and the cylinder, the mounting is very difficult, in particularly for the mass usage in the internal combustion engine factory, even it is impossible to be mounted or falls into cylinder or engine body, resulting great quality accidents.
6. In the repairing of the aged piston ring, when the oil ring is pushed out of cylinder together with the piston, the base ring will not go out of the piston but the blocking body will be ejected outwards (without definite direction) due to the resilience of the spring, which will cause damage to the repairman or other related person. In addition, if several engines are repaired simultaneously in the repairing factory, the blocking body might fall into the cylinder and engine body of other engines, which causes great quality accidents for the other engines.
7. Since the base ring and the blocking body are two separate pieces, there is axial tolerance in manufacturing, which causes leakage. There is tolerance in axial height of the blocking body and the base, which also causes leakage in the clearance in the contacting position of the upper surface of the base ring with the upper side of the piston ring groove. Or, there exists leakage in the contacting position of the arc-shaped upper scraping segment with the upper side of the piston ring groove.
8. Since the base ring and the blocking body are two separate pieces and respectively contact the coil expanding spring, there is a clearance owing that the axial height of the piston ring groove is large than the height of the blocking body. When the base ring and the blocking body move upwards and downwards in the piston ring groove, there exists a large leakage due to the inconsistent contacting of the upper sides of the base ring and the blocking body with the upper side of the ring groove.
9. Since the base ring and the blocking body are two separate pieces, there is radial tolerance in manufacturing, which causes leakage due to the non-simultaneous contacting of the outer arc-shaped surfaces of the upper scraping segment and of the outer circumferential surface on the split of the base ring with the cylinder wall. Or, the upper scraping segment can not contact the cylinder wall and thus has not sealing effect, and simultaneously inconsistent wear occurs, which causes leakage.
10. Since the base ring and the blocking body are two separate pieces, there is inconsistent deformation of torsion, which causes leakage.
11. Since the base ring and the blocking body are manufactured as two separate pieces, there is tolerance between the axial height of the semi-circular recess in the inner circumferential surface of the base ring and that of the semi-circular recess in the inner surface of the blocking body, , and the upper surface of the upper scraping segment and the upper surface of the base ring are not located in a same horizontal level when the coil expanding spring is mounted into the semi-circular recess, so that leakage occurs in the clearance between the upper surface of the upper scraping segment or the upper surface of the base ring and the upper side of the piston ring groove.
12. There is poor coordination among the axial height of the upper scraping segment, the axial height of the flange on the split of the base ring and the axial height of the flange on the outer circumferential surface of the base ring, thus the resulted sealing performance is also poor and the wear is non-uniform, and the oil ring is easily damaged.

### SUMMARY OF THE INVENTION

An objective of the invention is to provide a sealing oil ring that prevents oil leakage in a split of a base ring arisen from non-uniform deformation, and solves the problem of difficult mounting and improves sealing performance of the oil ring.

The objective of the invention is implemented as follows.

In one embodiment of the present invention provided is an oil sealing ring, comprising a base ring having a split; and an annular flange radially-protruding outwards and disposed on an outer circumferential surface of said base ring; wherein an axially-traversed trough is disposed on an inner circumferential surface of the base ring to the left of said split and a radially-traversed upper groove is disposed on an upper surface to the left of the split of said base ring, so that an outer radially-lapping segment and an outer axially-radially-lapping segment are formed to the left of the split of said base ring; an axially-traversed outer-groove disposed on said outer circumferential surface to the right of the split of said base ring; a groove disposed on said outer circumferential surface to the right of said axially-traversed outer groove of the base ring; said outer axially-radially-lapping segment is inserted into said groove disposed on said outer circumferential surface to the right of said axially-traversed outer groove of the base ring; and said outer radially-lapping segment is inserted into said axially-traversed outer groove.

In another embodiment of the present invention provided is an oil sealing ring, comprising a base ring having a split; and an annular flange radially-protruding outwards and disposed on an outer circumferential surface of said base ring; wherein an axially-traversed trough is disposed on an inner circumferential surface to the left of said split of the base ring, and a radially-traversed upper groove is disposed on an upper surface to the left of said split of the base ring, so that an outer axially-radially-lapping segment is formed to the left of the split of said base ring; a groove being disposed on an outer circumferential surface to the right of said split of the base ring; and said outer axially-radially-lapping segment is inserted into said groove disposed on an outer circumferential surface to the right of said split of the base ring.

Preferably, a spring expanding ring is disposed on inner circumferential surface of the base ring.

In another embodiment of the present invention provided is an oil sealing ring, comprising a base ring having a split; and an annular flange radially-protruding outwards and disposed on an outer circumferential surface of said base ring; a spring expanding ring is disposed on said inner circumferential surface of said base ring; wherein an axially-traversed trough is disposed on an inner circumferential surface to the left of the split of the base ring, and a radially-traversed lower groove is disposed on the lower surface, including a part of the flange and part therebelow (part below said part of the flange), to the left of the split of said base ring, so that a lapping segment is formed to the left of the split of said base ring; an upper groove is disposed at the top, including a part of the flange, of said outer circumferential surface to the right of the split of the base ring; and said lapping segment is inserted into said upper groove.

Preferably, a radially-traversed upper groove is disposed on an upper surface, above the flange, to the left of the split of said base ring.

Preferably, a groove is disposed on said outer circumferential surface, below the flange, to the right of said axially-traversed outer groove of said base ring.

Preferably, a radially-traversed upper groove is disposed on an upper surface, including a part of the flange, to the left of the split of said base ring.

Preferably, a groove is disposed on said outer circumferential surface, including a part of the flange and part therebelow, to the right of said axially-traversed outer groove of said base ring.

Preferably, only one annular upper-flange radially-protruding outwards is disposed on said outer circumferential surface of said base ring; and said annular upper-flange is disposed at the top portion of said outer circumferential surface of said base ring

Preferably, only one annular middle-flange radially-protruding outwards is disposed on outer circumferential surface of the base ring, and the annular middle-flange is disposed in the middle of the outer circumferential surface of the base ring.

Preferably, an annular lower-flange radially-protruding outwards is disposed at the bottom portion of the outer circumferential surface of the base ring, and the annular lower-flange and the outer axially-radially-lapping segment at an opening thereof are longitudinally-symmetric with the annular upper-flange and the outer axially-radially-lapping segment at an opening thereof with respect to an axial middle plane of the base ring.

Preferably, an oil scraping edge thickening in an axially-upward direction and/or an oil scraping edge thickening in an axially-downward direction are disposed on outer arc-shaped surface of an axially-lapping position of the flange on the split of the base ring.

Preferably, an oil scraping edge thickening in an axially-upward direction and/or an oil scraping edge thickening in an axially-downward direction are disposed on outer arc-shaped surface of an axially-lapping position of the flange on the split of the base ring and in its left and/or right adjacencies.

Preferably, an oil scraping edge thickening in an axially-upward direction is disposed on outer arc-shaped surface of an axially-lapping position of the flange on the split of the base ring.

Preferably, an oil scraping edge thickening in an axially-upward direction is disposed on outer arc-shaped surface of an axially-lapping position of the flange on the split of the base ring and in its right adjacency.

Preferably, an oil scraping edge thickening in an axially-downward direction is disposed on outer arc-shaped surface of an axially-lapping position of the flange on the split of the base ring.

Preferably, an oil scraping edge thickening in an axially-downward direction is disposed on outer arc-shaped surface of an axially-lapping position of the flange on the split of the base ring and in its right adjacency.

Preferably, an oil scraping edge thickening in an axially-upward direction is disposed on outer arc-shaped surface of an axially-lapping position of the flange on the split of the base ring and in its left adjacency.

Preferably, an oil scraping edge thickening in an axially-upward direction is disposed on outer arc-shaped surface of an axially-lapping position of the flange on the split of the base ring and in its left and right adjacency.

Preferably, an oil scraping edge thickening in an axially-downward direction is disposed on outer arc-shaped surface of an axially-lapping position of the flange on the split of the base ring and in its left and right adjacency.

Preferably, an upper outer-chamfer is disposed at a junction between an upper surface of the flange and the outer arc-shaped surface thereof, in addition to the outer arc-shaped surface of the axially-lapping position of said flange on said split of said base ring.

Preferably, at least one radial oil discharging channel is disposed on the base ring.

Since the oil sealing ring according to the invention employs the axially-traversed trough disposed on the inner circumferential surface to the left of the split of the base ring, the radially-traversed upper groove disposed on the upper surface (including a part of the flange) to the left of the split of the base ring, the outer radially-lapping segment and the outer axially-radially-lapping segment disposed to the left of the base ring, the axially-traversed outer groove disposed on the outer circumferential surface to the right of the base ring, a groove disposed on the outer circumferential surface (including a part of the flange and part below the flange) to the right of the axially-traversed outer-groove to the right of the split of the base ring, the inner radially-lapping segment and the inner axially-radially-lapping segment disposed to the right of the base ring, the outer axially-radially-lapping segment to the left of the base ring is inserted into the groove to the right of the base ring, and the outer radially-lapping segment to the left of the base ring is inserted into the axially-traversed outer groove to the right of the base ring to form the axially- and radially-connected split, the leakage in axial and radial direction at the split of the base ring is prevented.

### BRIEF DESCRIPTION OF THE DRAWINGS

FIG. 1 is a front view of an oil sealing ring according to a first embodiment of the invention;
FIG. 2 is a top view of an oil sealing ring according to a first embodiment of the invention;
FIG. 3 is a cross-sectional view along the line C-C in FIG. 1;
FIG. 4 is a cross-sectional view along the line B-B in FIG. 1;
FIG. 5 is a cross-sectional view along the line A-A in FIG. 2;
FIG. 6 is a front view of an oil sealing ring according to a second embodiment of the invention;
FIG. 7 is a top view of an oil sealing ring according to a second embodiment of the invention;
FIG. 8 is a cross-sectional view along the line A-A in FIG. 7;
FIG. 9 is a cross-sectional view along the line B-B in FIG. 7;
FIG. 10 is a top view of a base ring 2 with an opening split according to a second embodiment of the invention;
FIG. 11 is a cross-sectional view along the line B-B in FIG. 10;
FIG. 12 is a cross-sectional view along the line D-D in FIG. 10;
FIG. 13 is a front view of an oil sealing ring according to a third embodiment of the invention;
FIG. 14 is a top view of an oil sealing ring according to a third embodiment of the invention;
FIG. 15 is a cross-sectional view along the line A-A in FIG. 14;
FIG. 16 illustrates a spring expanding ring 9 disposed on the inner circumferential surface of a base ring 2 shown FIG. 2 according to a first embodiment of the invention;
FIG. 17 is a cross-sectional view along the line C-C in FIG. 16;
FIG. 18 is a cross-sectional view along the line A-A in FIG. 16;
FIG. 19 is a cross-sectional view along the line B-B in FIG. 16;

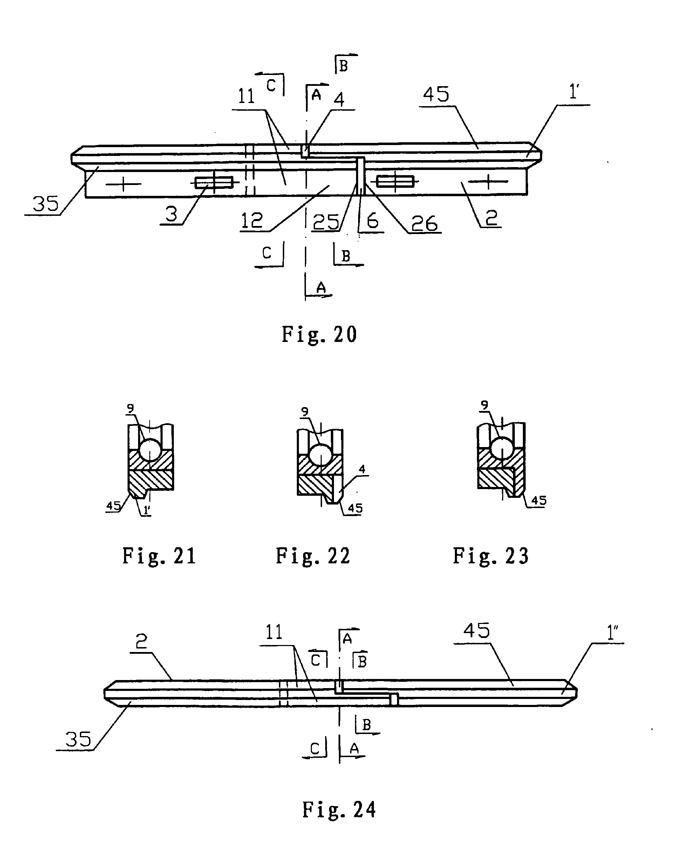

FIG. 20 illustrates an annular upper-flange 1' disposed at the top portion of outer circumferential surface of a base ring 2, in which only one annular upper-flange 1' radially-protrudes outwards and is disposed on the outer circumferential surface of the base ring 2;
FIG. 21 is a cross-sectional view along the line C-C in FIG. 20
FIG. 22 is a cross-sectional view along the line A-A in FIG. 20;
FIG. 23 is a cross-sectional view along the line B-B in FIG. 20;
FIG. 24 illustrates an annular middle-flange 1" disposed in the middle of the outer circumferential surface of a base ring 2, in which one annular middle-flange 1" radially-protrudes outwards and is disposed on the outer circumferential surface of the base ring 2;

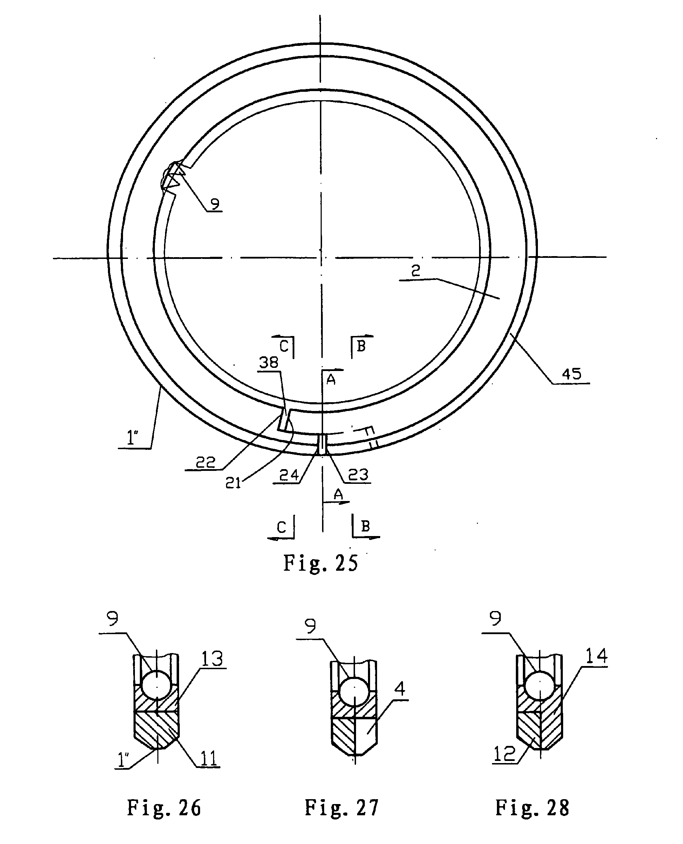

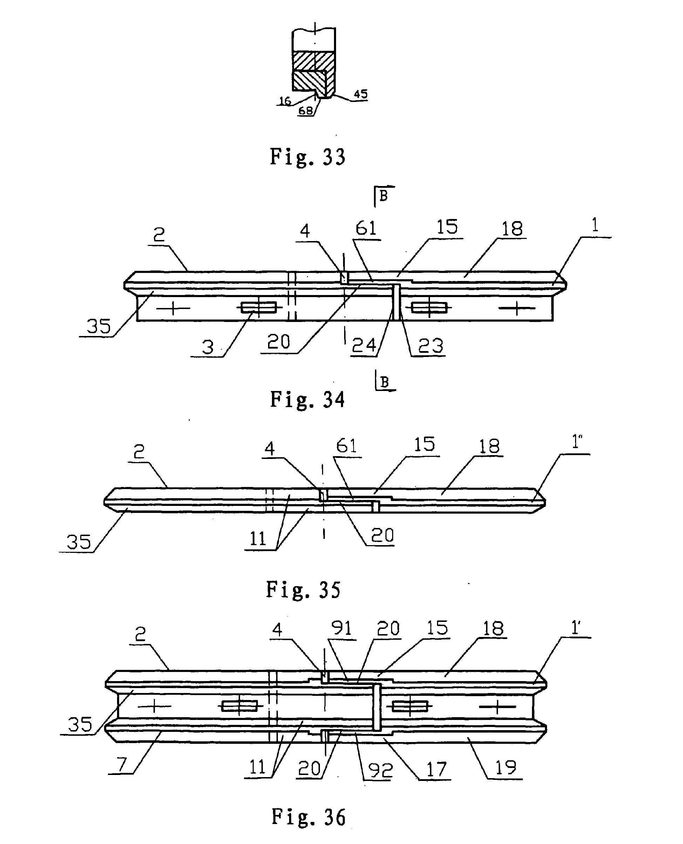

FIG. 25 is a top view of the base ring 2 having a spring expanding ring 9 in the inner circumferential surface thereof shown in FIG. 33;
FIG. 26 is a cross-sectional view along the line C-C in FIG. 25;
FIG. 27 is a cross-sectional view along the line A-A in FIG. 25
FIG. 28 is a cross-sectional view along the line B-B in FIG. 25
FIG. 29 illustrates an annular lower-flange 7 radially-protruding outwards and disposed at the bottom portion of the outer circumferential surface of the base ring 2 shown in FIG. 20, in which the annular lower-flange 7 and an outer axially-radially-lapping segment at the opening thereof are longitudinally symmetric with an annular upper-flange 1' and an outer axially-radially-lapping segment at an opening thereof with respect to an axial middle plane 8 of the base ring 2;
FIG. 30 illustrates an oil scraping edge 66 thickening in an axially-upward direction and disposed on outer arc-shaped surface of an axially-lapping position 20 of a flange on the split of the base ring 2, based on the oil ring shown in Fig.1;
FIG. 31 is a cross-sectional view along the line B-B in FIG. 30, in which an oil scraping edge 66 thickens in an axially-upward direction and is disposed on the outer arc-shaped surface of an axially-lapping position 20 of the flange on the split of the base ring 2;
FIG. 32 illustrates an oil scraping edge 68 thickening in an axially-downward direction and disposed on outer arc-shaped surface of an axially-lapping position 20 of the flange on the split of the base ring 2, based on the oil ring shown in Fig.1;
FIG. 33 is a cross-sectional view along the line B-B in Fig. 32, in which an oil scraping edge 68 thickening in an axially-downward direction is disposed on outer arc-shaped surface of an axially-lapping position 20 of the flange on the split of the base ring 2;
FIG. 34 illustrates an oil scraping edge 61 thickening in an axially-upward direction being disposed on outer arc-shaped surface of an axially-lapping position 20 of the flange on the split of the base ring 2 and in its right adjacency, on the basis of the oil ring shown in Fig.1;
FIG. 35 illustrates an oil scraping edge 61 thickening in an axially-upward direction being disposed on outer arc-shaped surface of an axially-lapping position 20 of the flange on the split of the base ring 2 and in its right adjacency, on the basis of the oil ring shown in Fig.24;
FIG. 36 illustrates an oil scraping edge 91 thickening in an axially-upward direction and disposed on outer arc-shaped surface of an axially-lapping position 20 of the flange on the split of the base ring 2 and in its left and right adjacencies; an oil scraping edge 92 thickening in an axially-downward direction and disposed on outer arc-shaped surface of an axially-lapping position 20 of the flange on the split of the base ring 2 and in its left and right adjacencies, on the basis of the oil ring shown in Fig. 29;
FIG. 37 illustrates an oil-discharging channel 3 radially-disposed on lower surface of the base ring of FIG. 24;
FIG. 38 is a (partial) top view of a base ring with an opening split of FIG. 2 according to a first embodiment of the invention;
FIG. 39 is a cross-sectional view along the line A-A after rotation in FIG. 38;
FIG. 40 is a cross-sectional view along the line B-B after rotation in FIG. 38;
FIG. 41 is a cross-sectional view along the line C-C after rotation in FIG. 38;
FIG. 42 is a cross-sectional view along the line D-D after rotation in FIG. 38;
FIG. 43 is a (partial) front view of a base ring 2 with an opening split of FIG. 1 according to a first embodiment of the invention;
FIG. 44 illustrates an oil scraping edge 91 thickening in an axially-upward direction and disposed on outer arc-shaped surface of an axially-lapping position 20 of the flange on the split of the base ring 2 and in its left and right adjacencies; an oil scraping edge 92 thickening in an axially-downward direction and disposed on outer arc-shaped surface of an axially-lapping position 20 of the flange on the split of the base ring 2 and in its left and right adjacencies, on the basis of the oil ring shown in Fig. 1;
FIG. 45 is a cross-sectional view along the line B-B in FIG. 44, in which an oil scraping edge 91 thickens in an axially-upward direction and is disposed on outer arc-shaped surface of an axially-lapping position 20 of the flange on the split of the base ring 2 and in its left and right adjacencies, and an oil scraping edge 92 thickens in an axially-downward direction and is disposed on outer arc-shaped surface of the axially-lapping position 20 of the flange on the split of the base ring 2 and in its left and right adjacencies;

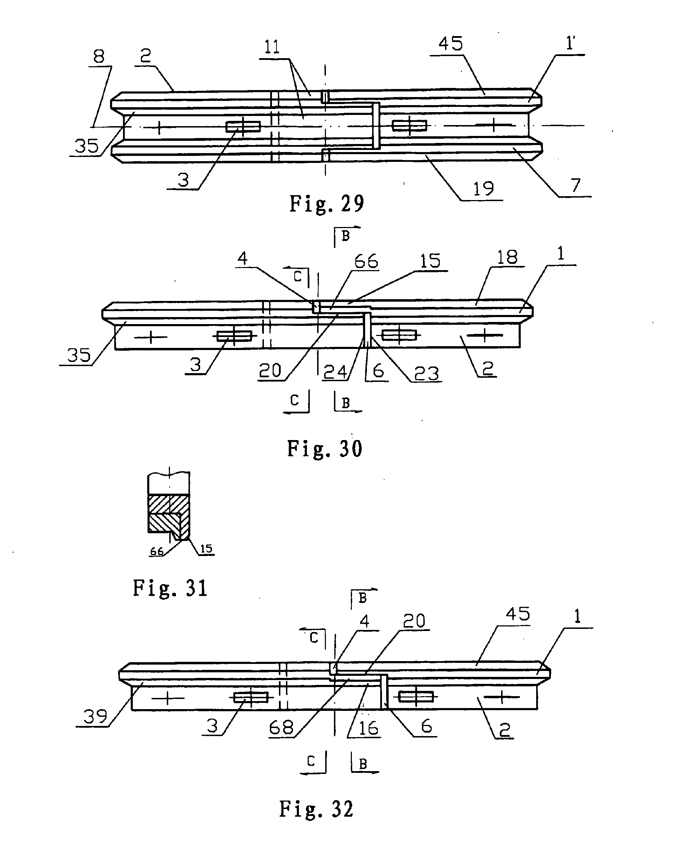

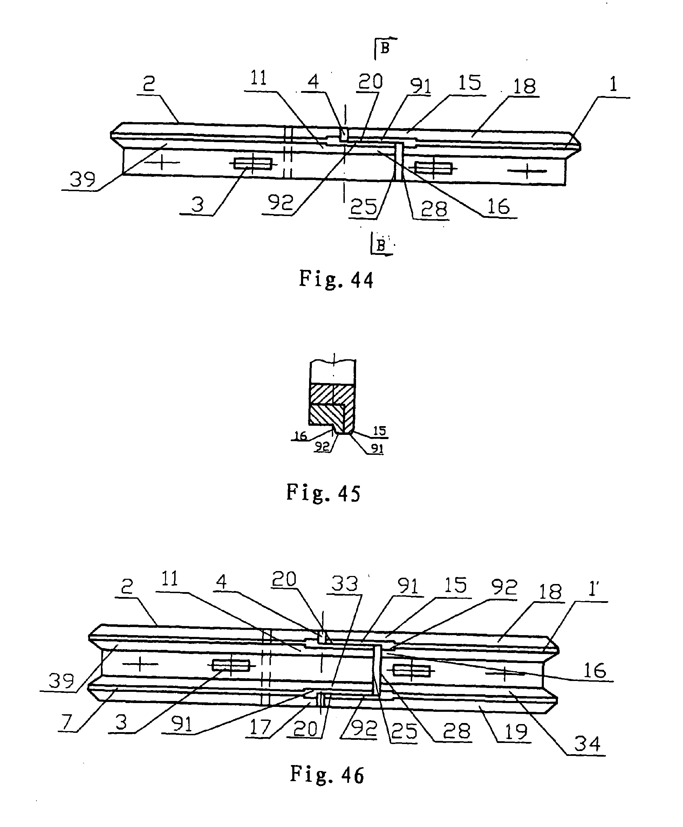

FIG. 46 illustrates an oil scraping edge 91 thickening in an axially-upward direction and disposed on outer arc-shaped surface of an axially-lapping position 20 of the flange 1' on the split of the base ring 2 and in its left and right adjacencies; an oil scraping edge 92 thickening in an axially-downward direction and disposed on outer arc-shaped surface of the axially-lapping position 20 of the flange 1' on the split of the base ring 2 and in its left and right adjacencies; an oil scraping edge 91 thickening in an axially-upward direction and disposed on outer arc-shaped surface of an axially-lapping position 20 of the flange 7 on the split of the base ring 2 and in its left and right adjacencies; and an oil scraping edge 92 thickening in an axially-downward direction and disposed on outer arc-shaped surface of the axially-lapping position 20 of the flange 7 on the split of the base ring 2 and in its left and right adjacencies, on the basis of oil ring shown in Fig. 29;

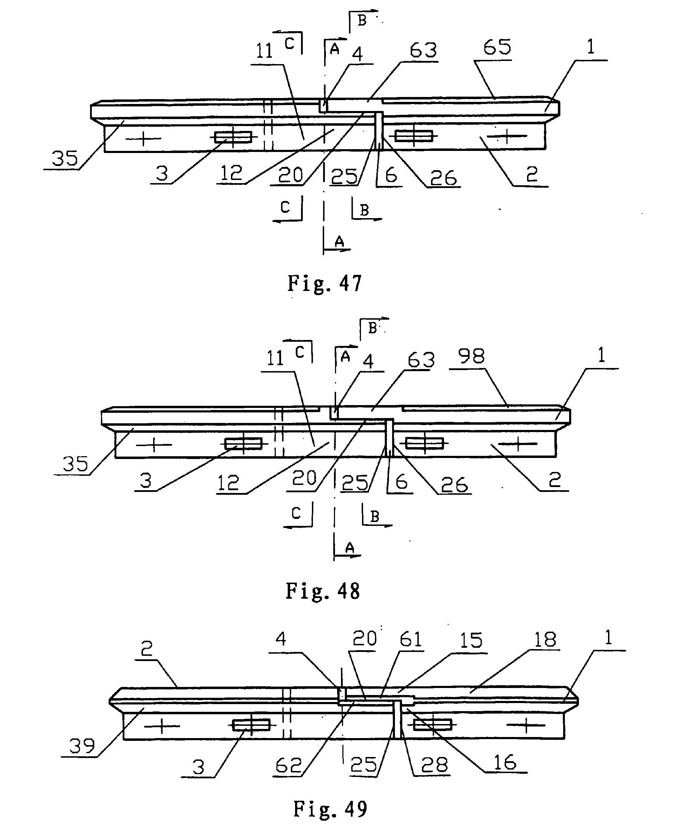

FIG. 47 illustrates an upper outer-chamfer 65 disposed at a junction between an upper surface of the flange 1 and outer arc-shaped surface thereof, in addition to the outer arc-shaped surface of the axially-lapping position of said flange on said split of said base ring;
FIG. 48 illustrates an upper outer-chamfer 98 disposed at a junction between an upper surface of the flange 1 and outer arc-shaped surface thereof, in addition to the outer arc-shaped surface of the axially-lapping position 20 of said flange 1 on said split of said base ring 2 and in its left and right
FIG. 49 illustrates an oil scraping edge 62 thickening in an axially-downward direction and disposed on outer arc-shaped surface of an axially-lapping position 20 of the flange 1 on the split of the base ring 2 and in its right adjacency, on the basis of oil ring shown in Fig. 34;
FIG. 50 illustrates an oil scraping edge 91 thickening in an axially-upward direction and disposed on outer arc-shaped surface of an axially-lapping position 20 of the flange 1 on the split of the base ring 2 and in its left and right adjacencies, on the basis of oil ring shown in FIG. 1;
FIG. 51 illustrates an oil scraping edge 62 thickening in an axially-downward direction and disposed on outer arc-shaped surface of an axially-lapping position 20 of the flange 1 on the split of the base ring 2 and in its right adjacency, on the basis of oil ring shown in FIG. 1;
FIG. 52 illustrates an oil scraping edge 91 thickening in an axially-upward direction and disposed on outer arc-shaped surface of an axially-lapping position 20 of the flange 1" on the split of the base ring 2 and in its left and right adjacencies, on the basis of oil ring shown in FIG. 24;
FIG. 53 illustrates an oil scraping edge 92 thickening in an axially-downward direction and disposed on outer arc-shaped surface of the axially-lapping position 20 of the flange 1" on the split of the base ring 2 and in its left and right adjacencies, on the basis of oil ring shown in FIG. 24;

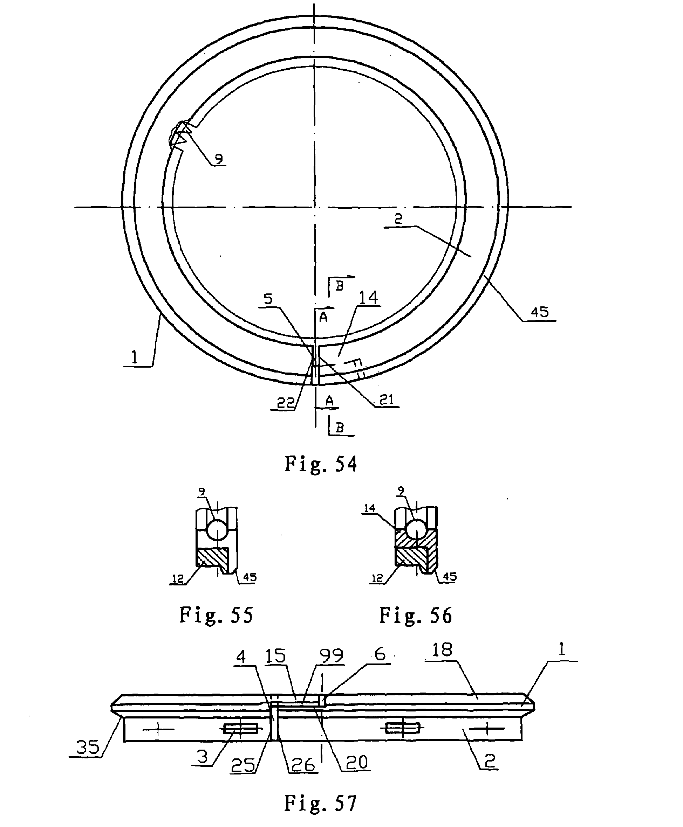

FIG. 54 is a top view of a base ring 2 having a spring expanding ring 9 in inner circumferential surface thereof of FIG. 7 according to a second embodiment of the invention;
FIG. 55 is a cross-sectional view along the line A-A in FIG. 54;
FIG. 56 is a cross-sectional view along the line B-B in FIG. 54; and
FIG. 57 illustrates an oil scraping edge 99 thickening in an axially-upward direction and disposed on outer arc-shaped surface of an axially-lapping position 20 of the flange on the split of the base ring 2 and in its left adjacency, on the basis of oil shown in FIG. 13.

### DETAILED DESCRIPTION OF THE INVENTION

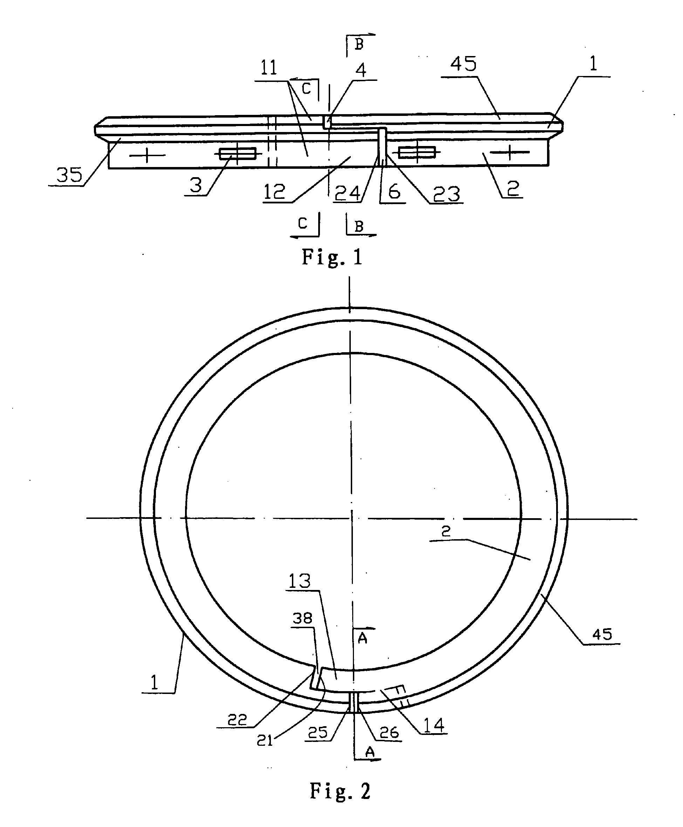

FIGS. 1-5 illustrate an oil sealing ring of a first embodiment of the invention.

FIG. 1 shows a front view of a base ring 2 of an oil sealing ring according to a first embodiment of the invention. FIG. 2 shows a top view of an oil sealing ring according to a first embodiment of the invention. As shown in FIG. 2, the oil sealing ring of the invention comprises a base ring 2 having a split, and an annular flange 1 radially-protruding outwards is disposed on an outer circumferential surface of the base ring 2. A central axis of the outer circumferential surface of the flange 1 coincides with that of the outer circumferential surface of the base ring 2. A chamfer 45 is disposed at a junction between the upper surface of the annular flange 1 and the outer circumferential surface thereof, and a lower outer-chamber 35 is disposed at a junction between the lower surface of the annular flange 1 and the outer circumferential surface thereof. This reduces axial height of the annular flange 1 and the area of the outer circumferential surface, and therefore also reduces the contact area and friction with respect to a cylinder wall, as shown in FIG. 1. The base ring 2 is a circular ring having a split, which is well-known in the art, and will not be described hereinafter.

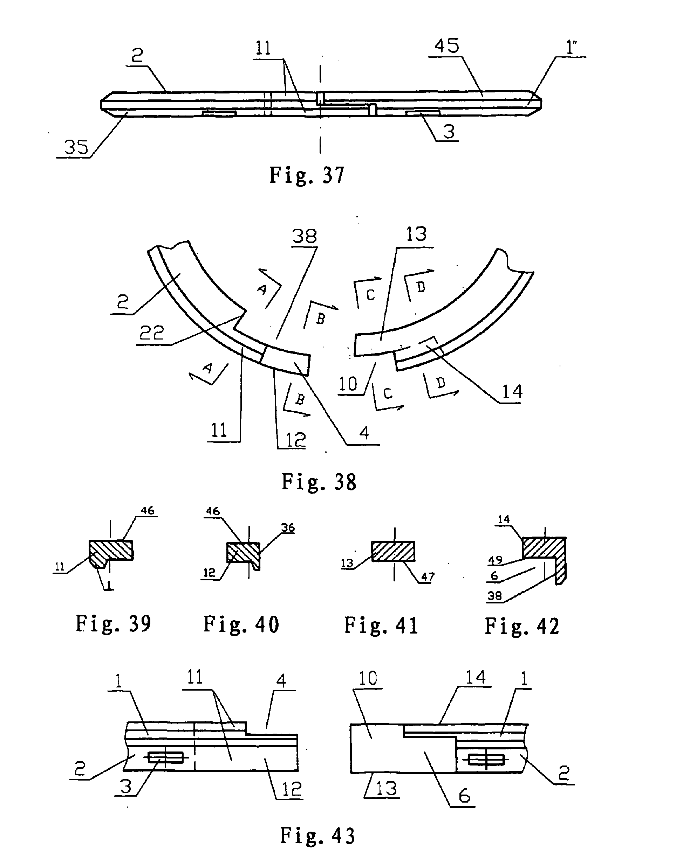

An axially-traversed trough 38 is disposed on the inner circumferential surface to the left of the split of the base ring 2, as shown in FIG. 38. A radially-traversed upper groove 4 is disposed on the upper surface (including a part of the flange) to the left of the split of the base ring 2. The lower bottom surface of the upper groove 4 is disposed in a position that is at the half axial height of the outer circumferential surface of the flange 1, as shown in FIG. 1. An outer radially-lapping segment 11 and an outer axially-radially-lapping segment 12 are formed to the left of the split of the base ring 2, as shown in FIG. 43. An axially-traversed outer groove 10 is disposed on the outer circumferential surface to the right of the split of the base ring 2 and a groove 6 is disposed on the outer circumferential surface (including a part of the flange and part below the flange) to the right of the axially-traversed outer-groove 10 to the right of the split of the base ring 2. The axial height of the groove 6 is disposed at a position that is at the half height of the outer circumferential surface of the flange 1, as shown in FIG. 43. An inner radially-lapping segment 13 and an inner axially-radially-lapping segment 14 are formed to the right of the split of the base ring 2, as shown in FIG. 38. The outer axially-radially-lapping segment 12 to the left of the split of the base ring 2 is inserted into a groove 6 to the right of the split of the base ring 2, and the outer radially-lapping segment 11 to the left of the split of the base ring 2 is inserted into an axially-traversed outer-groove 10 to the right of the base ring 2, so as to form radial joint/lapping between the inner radially-lapping segment 13 and the outer radially-lapping segment 11. The inner axially-radially-lapping segment 14 is radially- and axially-connected/lapped with the outer axially-radially-lapping segment 12.

The bottom surface of the axially-traversed trough 38 is arc-shaped, as shown in FIG. 38. A center of a radius of the arc-shaped surface coincides with that of the outer circumferential surface of the base ring 2. The bottom surfaces of the groove 6 and the axially-traversed outer-groove 10 are arc-shaped surfaces, as shown in FIG. 38. The radius of the arc-shaped surface is the same as that of the bottom surface of the axially-traversed trough 38, and both radius centers thereof coincide with each other. The bottom surface 36 of the radially-traversed upper groove 4 disposed at the top of the outer axially-radially-lapping segment 12 (as shown in FIG. 40) is contacted with an upper side 38 (as shown in FIG. 42) of the groove 6 connected thereto (but assembly clearance is reserved). The bottom surface 36 (as shown in FIG. 40, which is a cross-sectional view of FIG. 38 along the line B-B) of the axially-traversed trough 38 disposed on an inner arc-shaped surface of the outer axially-radially-lapping segment 14 is contacted with the bottom surface 49 (as shown in FIG. 42, which is a cross-sectional view of FIG. 38 along the line D-D) of the groove 6 disposed on the outer arc-shaped surface of the inner axially-radially-lapping segment 14. The bottom surface 46 (as shown in FIG. 39, which is a cross-sectional view of FIG. 38 along the line A-A) of the axially-traversed trough 38 disposed on an inner arc-shaped surface of the outer radially lapping segment 11 is contacted with the bottom surface 47 (as shown in FIG. 41) of the axially-traversed outer-groove 10 disposed on the outer arc-shaped surface of the inner radially lapping segment 13.

To prevent deadlock of both ends of the split of the base ring 2, a gap should be reserved between a right end 21 of the split of the base ring 2 and a side 22 of the axially-traversed trough 38 connected thereto, a gap is reserved between a left end 24 of the outer axially-radially-lapping segment 12 and a right side 23 of the groove 6 connected thereto, and a gap is reserved between a side 25 of the radially-traversed upper groove 4 and a side 26 of the axially-traversed outer-groove 10 connected thereto.

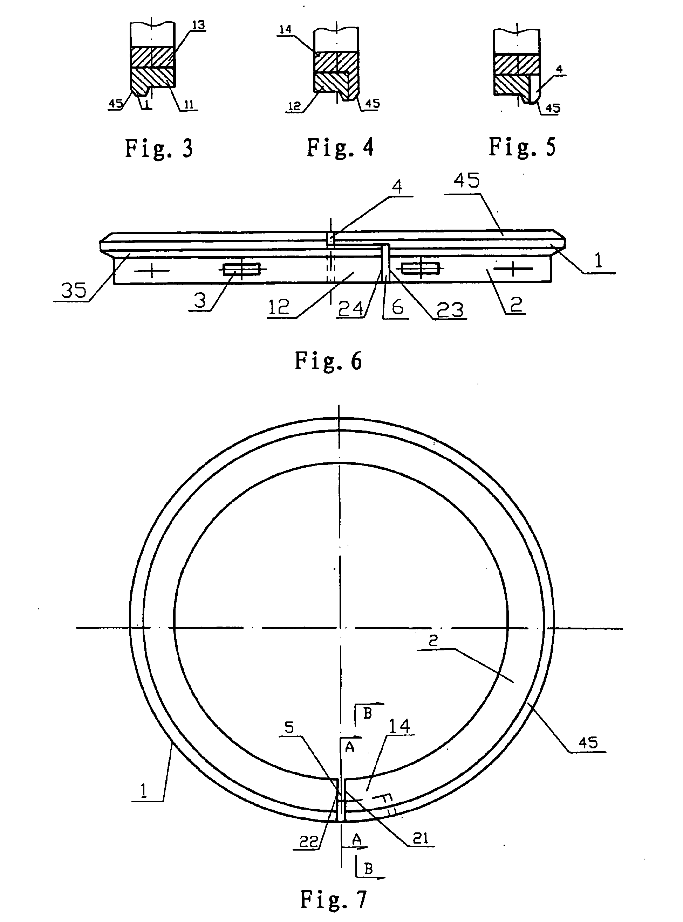

FIG. 3 is a cross-sectional view of FIG. 1 along the line C-C, FIG. 4 is a cross-sectional view of FIG. 1 along the line B-B, and FIG. 5 is a cross-sectional view of FIG. 2 along the line A-A.

FIGS. 6-12 illustrate an oil sealing ring of a second embodiment of the invention.

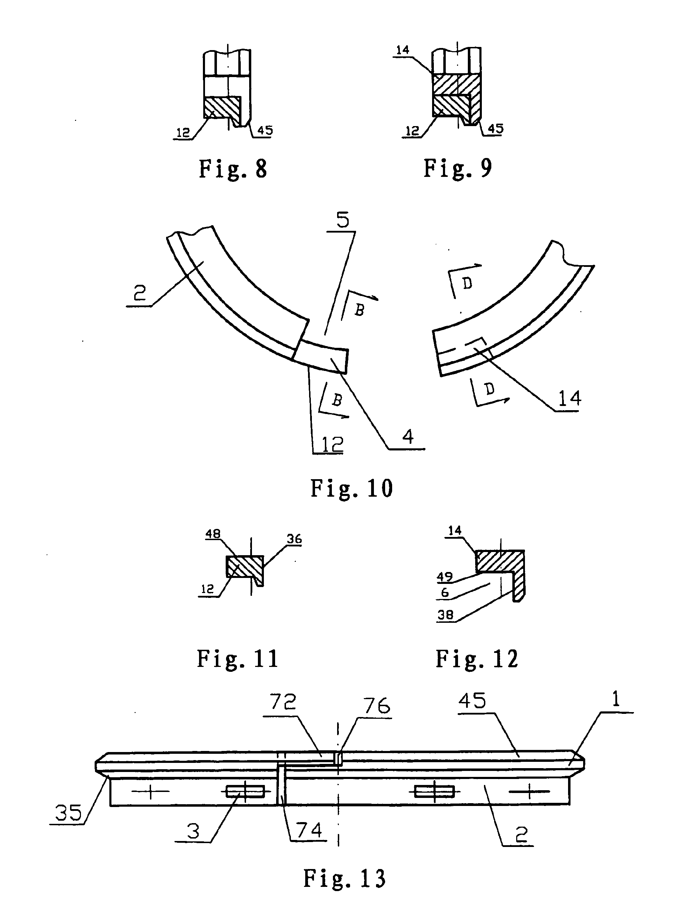

FIG. 6 is a front view of the base ring 2 of an oil sealing ring according to a second embodiment of the invention. FIG. 7 is a top view of an oil sealing ring according to the second embodiment of the invention. As shown in FIG. 7, an axially-traversed trough 5 is disposed on the inner circumferential surface to the left of the split of the base ring 2. A radially-traversed upper groove 4 is disposed on the upper surface (including a part of the flange) to the left of the split of the base ring 2. A lower bottom surface of the radially-traversed upper groove 4 is disposed in a position that is at half axial height of the outer circumferential surface of the flange 1, as shown in FIG. 6. An outer axially-radially-lapping segment 12 is formed to the left of the base ring 2. A groove 6 is disposed to the right of the split of the base ring 2 including a part of the flange and part therebelow. An axial height of the groove 6 is disposed in a position that is at half axial height of the outer circumferential surface of the flange 1, as shown in FIG. 6. An inner axially-radially-lapping segment 14 is formed to the right of the base ring 2. The outer axially-radially-lapping segment 12 to the left of the base ring 2 is inserted into a groove 6 to the right of the split of the base ring 2, so as to form an axially- and radially-connected split structure. The bottom surface of the axially-traversed trough 5 is arc-shaped, as shown in FIG. 10. A center of radius of the arc-shaped surface coincides with that of the outer circumferential surface of the base ring 2. The bottom surface of the groove 6 is an arc-shaped surface, as shown in FIGS. 10 and 12. A radius of the arc-shaped surface is the same as that of the bottom surface of the axially-traversed trough 5, and both centers of radius thereof coincide with each other. The arc-shaped surface of the bottom surface 49 of the groove 6 is contacted with arc-shaped surface of the bottom surface 48 of the axially-traversed trough 5 (assembly clearance can be reserved). The bottom surface 36 of the radially-traversed upper groove 4 of the outer axially-radially-lapping segment 12 is contacted with an upper side 38 of the groove 6 connected thereto (but assembly clearance is reserved).

To prevent deadlock of both ends of the split of the base ring 2, a gap should be reserved between a right end 21 of the split of the base ring 2 and a side 22 of the axially-traversed trough 5 connected thereto, a gap is should be reserved between a left end 24 of the outer axially-radially-lapping segment 12 to the left of the split of the base ring 2 and a side 23 of the groove 6 connected thereto, as shown in FIG. 6.

FIG. 8 is a cross-sectional view of FIG. 7 along the line A-A. FIG. 9 is a cross-sectional view of FIG. 7 along the line B-B. FIG. 10 is a top view of a base ring 2 with an opening split of the second embodiment of the invention. FIG. 11 is a cross-sectional view of FIG. 10 along the line B-B. FIG. 12 is a cross-sectional view of FIG. 10 along the line D-D.

FIGS. 13-15 illustrate an oil sealing ring according to a third embodiment of the invention.

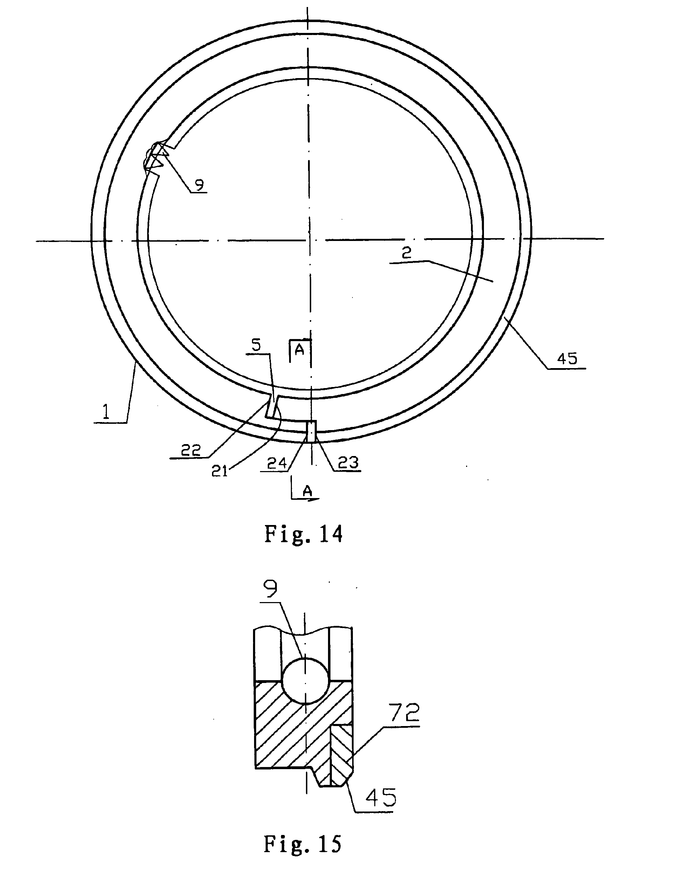

FIG. 13 is a front view of an oil sealing ring of a third embodiment of the invention. FIG. 14 is a top view of an oil sealing ring of the third embodiment of the invention. As shown in FIG. 14, a spring expanding ring is disposed on the inner circumferential surface of the base ring 2, and an axially-traversed trough 5 is disposed on the inner circumferential surface to the left of the split of the base ring 2, an radially-traversed lower groove 74 is disposed on a lower surface (including a part of the flange and part below the flange) to the left of the split of the base ring 2 (the axial height of the lower groove 74 is disposed in a position that is at half height of the outer circumferential surface of the flange 1, as shown in FIG. 13), a lapping segment 72 is formed to the left of the base ring 2, an upper groove 76 is disposed on the top (including a part of the flange) of the outer circumferential surface to the right of the split of the base ring 2. The lower bottom surface of the upper groove 76 is disposed in a position that is at half axial height of the outer circumferential surface of the flange 1, as shown in FIG. 13. The lapping segment 72 to the left of the base ring 2 is inserted into the upper groove 76 to the right of the base ring 2, so as to form an axially- and radially-connected split structure. The bottom surface of the axially-traversed trough 5 is arc-shaped surface. A center of a radius of the arc-shaped surface coincides with that of the outer circumferential surface of the base ring 2. The bottom surface of the upper groove 76 is an arc-shaped surface, and a radius of the arc-shaped surface is the same as that of the bottom surface of the axially-traversed trough 5, and both centers of radius thereof coincide with each other. The arc-shaped surface of the bottom surface of the upper groove 76 is contacted with the arc-shaped surface of the bottom surface of the axially-traversed trough 5 (assembly clearance can be reserved). The bottom surface of the lapping segment 72 is contacted with a lower side of the upper groove 76 connected thereto (but assembly clearance is reserved)

To prevent deadlock of both ends of the split of the base ring 2, a gap should be reserved between a right end 21 of the split of the base ring 2 and a side 22 of the axially-traversed trough 5 connected thereto, a gap should be reserved between a left end 24 of the lapping segment 72 and a side 23 of the upper groove 76 connected thereto. FIG. 15 is a cross-sectional view of FIG. 14 along the line A-A.

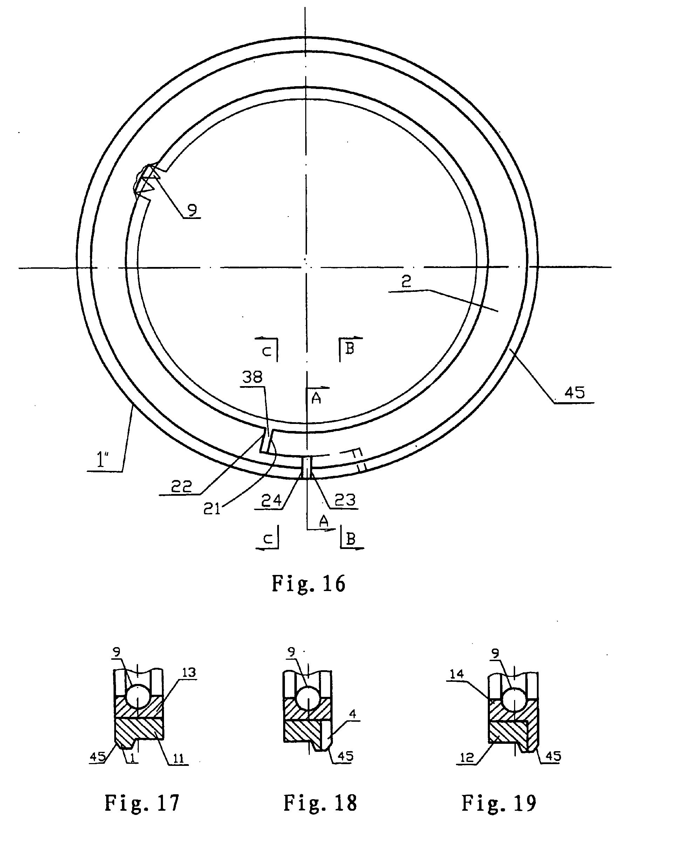

FIG. 16 illustrates another embodiment of the present invention, in which a spring expanding ring 9 is provided, on the basis of the embodiment shown in FIG.2. The spring expanding ring 9 can be a coil spring loaded or a snake-shaped spring. Preferably, a semi-circular recess for receiving the spring expanding ring is provided in the inner circumferential surface of the base ring 2, in which recess a coil expanding spring is arranged. A coil-spring loaded structure is formed by connecting two ends of a curved coil spring, and a latch pin is disposed in an inner circular hole between the two connected ends of the spring, which is well-known in the art. Preferably, a coil spring is used.

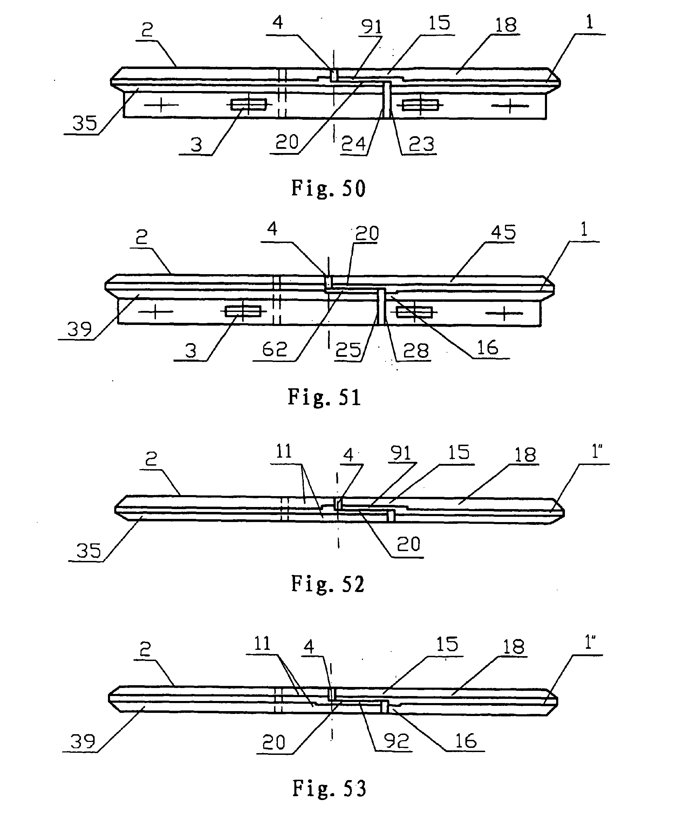

As shown in FIG. 44, an oil scraping edge 91 thickening in an axially-upward direction is disposed on outer arc-shaped surface of an axially-lapping position 20 of the flange on the split of the base ring 2 and in its left and right adjacencies. FIG. 45 is a cross-sectional view along the line B-B of FIG. 44. A groove 6 is disposed on the outer circumferential surface (including a part of the flange and part therebelow) to the right of the axially-traversed outer-groove 10 to the right of the split of the base ring 2. The axial height of the groove 6 is disposed in a position that is at half axial height of the outer circumferential surface of the flange 1, as shown in FIG. 1. The flange at the axially-lapping position is very thin and is of low intensity, poor sealing performance and small chromium plating joint surface. The production thereof is very difficult, and the waste product rate is also higher, and even it is very difficult to produce the oil ring. To enhance intensity of the flange at the axially-lapping position, enlarge chromium plating joint surface and improve sealing performance, an oil scraping edge 91 thickening in an axially-upward direction is disposed on outer arc-shaped surface of the axially-lapping position 20 of the flange and in its left and right adjacencies, as shown in FIG. 45. In addition, since the radially-traversed upper-groove 4 is disposed on the upper surface (including a part of the flange) to the left of the split of the base ring 2 and the lower bottom surface of this upper-groove 4 is arranged in position that is at half axial height of the outer circumferential surface of the flange 1 (as shown in FIG. 1), similarly, the flange at the axially-lapping position is very thin and is of low intensity, poor sealing performance and small chromium plating joint surface, an oil scraping edge 92 thickening in an axially-downward direction is disposed on the outer arc-shaped surface of the axially-lapping position 20 of the flange and in its left and right adjacencies, as shown in FIG. 51. This design guarantees intensity of an oil scraping edge (flange) at the split of the base ring 2, prevents dechroming (a layer of chromium needs to be electroplated on the surface of a piston ring), and offers good sealing performance at the split of the base ring 2, and facilitates production. An upper chamfer 15 is disposed at a junction between the upper surface of the oil scraping edge 91 thickening in an axially-upward direction and the outer arc-shaped surface of thereof. In addition, a large upper chamfer 18 is disposed at a junction between the upper surface of the flange 1 and the outer arc-shaped surface thereof. A lower chamfer 16 is disposed at a junction between the lower surface of the oil scraping edge 92 thickening in an axially-downward direction and the outer arc-shaped surface thereof. In addition, a large lower chamfer 39 is disposed at a junction between the lower surface of the flange 1 and the outer arc-shaped surface thereof, as shown in FIGS. 44 and 45, which greatly reduces the axial height of the flange 1 (oil scraping edge) and therefore reduces the friction.

## Claims

1. An oil sealing ring, comprising a base ring (2) having a split; and an annular flange (1) radially-protruding outwards and disposed on an outer circumferential surface of said base ring (2); wherein an axially-traversed trough (38) is disposed on an inner circumferential surface of the base ring to the left of said split and a radially-traversed upper groove (4) is disposed on an upper surface to the left of the split of said base ring (2), so that an outer radially-lapping segment (11) and an outer axially-radially-lapping segment (12) are formed to the left of the split of said base ring (2); an axially-traversed outer-groove (10) disposed on said outer circumferential surface to the right of the split of said base ring (2); a groove (6) disposed on said outer circumferential surface to the right of said axially-traversed outer groove (10) of the base ring; said outer axially-radially-lapping segment (12) is inserted into said groove (6) disposed on said outer circumferential surface to the right of said axially-traversed outer groove (10) of the base ring; and said outer radially-lapping segment (11) is inserted into said axially-traversed outer groove (10).

2. An oil sealing ring, comprising a base ring (2) having a split; and an annular flange (1) radially-protruding outwards and disposed on an outer circumferential surface of said base ring (2); wherein an axially-traversed trough (5) is disposed on an inner circumferential surface to the left of said split of the base ring, and a radially-traversed upper groove (4) is disposed on an upper surface to the left of said split of the base ring, so that an outer axially-radially-lapping segment (12) is formed to the left of the split of said base ring (2); a groove (6) being disposed on an outer circumferential surface to the right of said split of the base ring; and said outer axially-radially-lapping segment (12) is inserted into said groove (6) disposed on an outer circumferential surface to the right of said split of the base ring.

3. An oil sealing ring, comprising a base ring (2) having a split; and an annular flange (1) radially-protruding outwards and disposed on an outer circumferential surface of said base ring (2); a spring expanding ring (9) is disposed on an inner circumferential surface of said base ring (2); wherein an axially-traversed trough (5) is disposed on an inner circumferential surface to the left of the split of the base ring, and a radially-traversed lower groove (74) is disposed on the lower surface, including a part of the flange and part therebelow, to the left of the split of said base ring (2), so that a lapping segment (72) is formed to the left of the split of said base ring (2); an upper groove (76) is disposed at the top, including a part of the flange, of said outer circumferential surface to the right of the split of the base ring; and said lapping segment (72) is inserted into said upper groove (76).

4. The oil sealing ring of claim 1 or 2, wherein a spring expanding ring (9) is disposed on the inner circumferential surface of said base ring (2).

5. The oil sealing ring of claim 1, 2 or 4, wherein a radially-traversed upper groove (4) is disposed on an upper surface, including a part of the flange, to the left of the split of said base ring (2).

6. The oil sealing ring of claim 1, 2, 4 or 5, wherein a groove (6) is disposed on said outer circumferential surface, including a part of the flange and part therebelow, to the right of said axially-traversed outer groove (10) of said base ring (2).

7. The oil sealing ring of one of claims 1-6, wherein only one annular upper-flange (1') radially-protruding outwards is disposed on said outer circumferential surface of said base ring (2); and said annular upper-flange (1') is disposed at the top portion of said outer circumferential surface of said base ring (2).

8. The oil sealing ring of one of claims 1-6, wherein only one annular middle-flange (1 ") radially-protruding outwards is disposed on said outer circumferential surface of said base ring (2); and said annular middle-flange (1 ") is disposed in the middle of said outer circumferential surface of said base ring (2).

9. The oil sealing ring of claim 7, wherein an annular lower-flange (7) radially-protruding outwards is disposed at the bottom portion of said outer circumferential surface of said base ring (2); and said annular lower-flange (7) and said outer axially-radially-lapping segment at the split thereof are longitudinally symmetric with said annular upper-flange (1') and said outer axially-radially-lapping segment at the split thereof with respect to an axial middle plane (8) of said base ring (2).

10. The oil sealing ring of one of claims 1-9, wherein an oil scraping edge thickening in an axially-upward direction and/or an oil scraping edge thickening in an axially-downward direction are disposed on an outer arc-shaped surface of an axially-lapping position (20) of said flange on said split of said base ring (2).

11. The oil sealing ring of one of claims 1-9, wherein an oil scraping edge thickening in an axially-upward direction and/or an oil scraping edge thickening in an axially-downward direction are disposed on an outer arc-shaped surface, and in its left and/or right adjacencies, of an axially-lapping position (20) of said flange on said split of said base ring (2).

12. The oil sealing ring of one of claims 1-9, wherein an oil scraping edge (66) thickening in an axially-upward direction is disposed on an outer arc-shaped surface of an axially-lapping position (20) of said flange on said split of said base ring (2).

13. The oil sealing ring of one of claims 1-9, wherein an oil scraping edge (61) thickening in an axially-upward direction is disposed on an outer arc-shaped surface, and in its right adjacency, of an axially-lapping position (20) of said flange on said split of said base ring (2).

14. The oil sealing ring of one of claims 1-9 and 12-13, wherein an oil scraping edge (68) thickening in an axially-downward direction is disposed on an outer arc-shaped surface of an axially-lapping position (20) of said flange on said split of said base ring (2).

15. The oil sealing ring of one of claims 1-9 and 12-13, wherein an oil scraping edge (62) thickening in an axially-downward direction is disposed on an outer arc-shaped surface, and in its right adjacency, of an axially-lapping position (20) of said flange on said split of said base ring (2).

16. The oil sealing ring of one of claims 1-9, wherein an oil scraping edge (99) thickening in an axially-upward direction is disposed on outer arc-shaped surface, and in its left adjacency, of an axially-lapping position (20) of said flange on the split of said base ring (2).

17. The oil sealing ring of one of claims 1-9, wherein an oil scraping edge (91) thickening in an axially-upward direction is disposed on outer arc-shaped surface, and in its left and right adjacencies, of an axially-lapping position (20) of said flange on said split of said base ring (2).

18. The oil sealing ring of one of claims 1-9 and 17, wherein an oil scraping edge (92) thickening in an axially-downward direction is disposed on an outer arc-shaped surface, and in its left and right adjacencies, of an axially-lapping position (20) of said flange on said split of said base ring (2).

19. The oil sealing ring of one of claims 1-9, wherein an small upper outer-chamfer (65) is disposed at a junction between upper surface of said flange (1) and said outer arc-shaped surface thereof, in addition to the outer arc-shaped surface and its right adjacency of the axially-lapping position (20) of said flange on said split of said base ring (2).
